# EUROPÄISCHE PATENTSCHRIFT

(11) **EP 0 315 084 B1**
(45) Veröffentlichungstag und Bekanntmachung des Hinweises auf die Patenterteilung: **09.06.1993**
(21) Anmeldenummer: 88118042.6
(22) Anmeldetag: 29.10.1988
(51) Int. Cl.: C09D 5/03, C09D 5/46

(54) **Verfahren zur Erhöhung der elektrostatischen Aufladbarkeit von Pulverlacken oder Pulvern und deren Verwendung zur Oberflächenbeschichtung von festen Gegenständen**
Method for increasing the electrostatic chargeability of powder varnishes or powders, and their use in the surface coating of solid objects
Procédé pour accroître la chargeabilité électrostatique des peintures en poudre ou des poudres et leur application au revêtement de surface des objets solides

(30) Priorität: 05.11.1987 DE 3737493
(43) Veröffentlichungstag der Anmeldung: 10.05.1989
(73) Patentinhaber: HOECHST AKTIENGESELLSCHAFT, 65926 Frankfurt am Main (DE)
(72) Erfinder: Macholdt, Hans-Tobias, Dr., D-6100 Darmstadt (DE); Sieber, Alexander, Dr., D-6230 Frankfurt am Main 80 (DE); Godau, Claus, D-6229 Kiedrich (DE); Manz, Albrecht, Dr., D-6200 Wiesbaden (DE)

(56) Entgegenhaltungen:
- EP-A- 0 260 638
- DE-A- 3 600 395
- DE-C- 3 130 612

## Beschreibung

Die vorliegende Erfindung betrifft ein Verfahren zur Erhöhung der elektrostatischen Aufladbarkeit von Pulverlacken oder Pulvern, in dem man in Pulverlacke oder Pulver salzartige, kationische Verbindungen bestimmter Struktur homogen einarbeitet, sowie die Verwendung der so behandelten Pulverlacke oder Pulver zur Oberflächenbeschichtung von festen Gegenständen (Werkstücken).

Die Pulverlacktechnologie kommt u.a. beim Lackieren von Kleingegenständen, wie Gartenmöbeln, Campingartikeln, Haushaltsgeräten, Fahrzeugkleinteilen, Kühlschränken und Regalen, sowie beim Lackieren von kompliziert geformten Werkstücken zur Anwendung. Größtenteils werden metallische Gegenstände lackiert, aber auch beispielsweise Kunststoffe sind mit der Pulverlacktechnologie lackierbar. Gegenüber anderen Lackierverfahren, wie Streichen, Tauchen und konventionellem Spritzen, hat die Pulverlacktechnologie eine Reihe von Vorteilen. Das Lackierverfahren arbeitet beispielsweise lösungsmittelfrei und damit umweltfreundlich und kostengünstiger.

Auch hinsichtlich der Entsorgung, Arbeitssicherheit (Abwesenheit brennbarer Lösungsmittel), Arbeitshygiene und des Umweltschutzes sowie des Zeitaufwandes für einen Lackiervorgang ist das Verfahren vorteilhaft.

Die Pulverlacktechnologie basiert auf dem Prinzip der elektrostatischen Aufladung. Der Pulverlack bzw. das Pulver enthält seine elektrostatische Ladung im allgemeinen nach einem der beiden folgenden Verfahren:
a) Beim Corona-Verfahren wird der Pulverlack bzw. das Pulver an einer geladenen Corona vorbeigeführt und hierbei aufgeladen.
b) Beim triboelektrischen bzw. elektrokinetischen Verfahren wird vom Prinzip der Reibungselektrizität Gebrauch gemacht. Der Pulverlack bzw. das Pulver erhält im Sprühgerät eine elektrostatische Aufladung, die der Ladung des Reibungspartners, im allgemeinen ein Schlauch oder Sprührohr (beispielsweise aus Polytetrafluorethylen), entgegengesetzt ist.

Auch eine Kombination von beiden Verfahren ist möglich.

Als Pulverlackharze werden typischerweise Epoxidharze, carboxyl- und hydroxylgruppenhaltigen Polyesterharze und Acrylharze zusammen mit den entsprechenden Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Typische Härterkomponenten für Epoxidharze sind beispielsweise Säureanhydride, Imidazole sowie Dicyandiamid und deren Abkömmlinge. Für hydroxylgruppenhaltige Polyesterharze sind die Härterkomponenten typischerweise beispielsweise Säureanhydride, verkappte Isocyanate, Bisacylurethane, Phenolharze, Melaminharze, für carboxylgruppenhaltige Polyesterharze typischerweise beispielsweise Triglycidylisocyanurate oder Epoxidharze. In Acrylharzen kommen typischerweise beispielsweise Oxazoline, Isocyanate, Triglycidylisocyanurate oder Dicarbonsäuren als Härterkomponenten zur Anwendung.

Das Verfahren der Aufladung der Pulverlacke bzw. Pulver durch Reibungselektrizität hat gegenüber dem Verfahren der Corona-Aufladung eine Reihe von Vorteilen. So entfällt beispielsweise der Aufwand für Erzeugung und Isolation der Hochspannung zum Betreiben der Corona, was beispielsweise die Arbeitssicherheit, insbesondere im Handbetrieb, erhöht. Zudem werden dadurch die Sprühgeräte leichter, was wiederum vor allem für Handsprühgeräte von Bedeutung ist.

Ferner weisen Pulverlacke, die durch Reibung elektrostatisch aufgeladen werden, eine gleichmäßigere Ladung auf und neigen weniger zum Rücksprühen. (Unter "Rücksprühen" versteht man den Effekt, daß Pulverlackteilchen, die bereits auf dem besprühten Werkstück haften, sich von diesem wiederum lösen und nach allen Seiten davonfliegen.) Außerdem können die Sprühlanzen der Applikationsgeräte, die nach dem Prinzip der Reibungsaufladung arbeiten, problemlos um mehrere Meter verlängert werden, dichter an den zu besprühenden Körper herangeführt und damit auch in Rohre oder Hohlräume eingeführt werden.

Dagegen tritt bei Pulverlacken, die nach dem Verfahren der Reibungsaufladung versprüht werden, häufig das Problem auf, daß die Pulverteilchen ungenügend aufgeladen werden und einen schlechten Umgriff am besprühten Werkstück ergeben. (Der Ausdruck "Umgriff" ist ein Maß dafür, inwieweit sich ein Pulverlack am besprühten Werkstück auch an Rückseiten, Hohlräumen, Spalten und vor allem im Sprühschatten und an Innenkanten und -ecken absetzt.)

Der Mangel ungenügender Aufladung ist vor allem bei Pulverlacken, die auf Basis von Polyesterharzen, insbesondere carboxylgruppenhaltigen Polyestern, oder auf Basis von sogenannten Mischpulvern hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke.

Während sich Pulverlacke auf reiner Epoxidharzbasis noch relativ gut triboelektrisch versprühen lassen, arbeitet das Verfahren (triboelektrische Versprühung) mit Mischpulvern oder Pulverlacken auf Polyesterharzbasis im allgemeinen nicht zufriedenstellend. Das bedeutet, daß man bei triboelektrisch versprühten Pulverlacken hinsichtlich der Auswahl der Harze stark eingeschränkt ist. Dies ist insofern sehr unbefriedigend, als gerade über die Harzbasis die verschiedensten Eigenschaften eines Pulverlackes eingestellt werden können. Daher können heute nicht in jedem Fall alle anwendungstechnischen Erfordernisse mit triboelektrisch versprühten Pulverlacken erfüllt werden, was die noch geringe Verbreitung dieses an sich vorteilhaften Verfahren erklärt.

Es bestand daher ein Bedürfnis, Pulverlacken oder Pulvern auf verschiedenster Harzbasis, insbesondere triboelektrisch versprühbaren Pulverlacken, eine höhere und gleichmäßigere Aufladung verleihen zu können, sowie eine möglichst hohe und einheitliche Abscheidequote beim Besprühen auf dem Werkstück zu erreichen, wobei die sonstigen Eigenschaften des Pulverlackes, wie die mechanischen Eigenschaften und die Verarbeitbarkeit, möglichst wenig beeinträchtigt werden sollen.

Ein bekanntes Verfahren zur Verbesserung der elektrostatischen Aufladung von triboelektrisch versprühbaren Pulverlacken besteht in der Zugabe von Aluminiumoxid (F. Haselmeyer, K. Oehmichen, DEFAZET, 27. Jahrg. Nr. 11, 1973, Seite 529). Bei diesem Vorgehen wird das Aluminiumoxid dem fertigen Pulverlack vor dem Versprühen zugesetzt, typischerweise in Konzentrationen zwischen 1 und 5 %. Hierbei wird aber das genannte Material in den Pulverlack nicht homogen eingearbeitet, was vor allem bei kontinuierlicher Arbeitsweise zu Schwierigkeiten führt.

Wird andererseits das Aluminiumoxid in die Pulverlacke homogen eingearbeitet (dispergiert), so verliert es seine aufladungserhöhende Wirkung. Die Schwierigkeiten beim Zusatz von beispielsweise Aluminiumoxid bestehen darin, daß in der Praxis nur eine vorübergehende Verbesserung der elektrostatischen Aufladung erzielt wird. Hinzu kommen Probleme der einheitlichen Vermengung von Pulverlack und Zusatzstoff, der Entmischung von Pulverlack und Zusatzstoff sowie Probleme der Abrasion in der Aufladezone.

Ein anderer Versuch, die Aufladung von triboelektrisch versprühbaren Pulverlacken zu verbessern, wird in der DE-OS 3600395 A1 beschrieben. In dieser Offenlegungsschrift wird das an sich bekannte Problem der mangelnden Aufladbarkeit von triboelektrisch versprühbaren Pulverlacken ebenfalls dargelegt und als Lösungsmöglichkeit in nur allgemeiner Weise der Zusatz von kapillaraktiven Netzmitteln auf Basis von quaternären Ammoniumverbindungen oder von beispielsweise metallhaltigen Pigmenten, vorzugsweise Zinkstaub, postuliert.

In der früheren europäischen Patentanmeldung EP-A 260 638 (benannte Vertragsstaaten DE, FR, GB) werden unter anderem 3 % Cetylpyridinium-Chlorid in Polyesterharz, 1 % Stearyl-dimethylbenzylammonium-p-toluolsulfonat in Acrylharz und 0,8 % [C₁₆H₃₃N(CH₃)₃]⁺ 1/6[Mo₇O₃₆] in Vinylchloridharz als elektrisch aufladbare Pulverlacke genannt.

Überraschenderweise wurde nun gefunden, daß spezielle, salzartige, kationische Verbindungen die elektrostatische Aufladbarkeit von Pulverlacken und Pulvern, insbesondere von triboelektrisch versprühten Pulverlacken erhöhen, wenn sie in diese homogen eingearbeitet werden. Die dadurch bewirkte höhere elektrostatische Aufladung hat als weiteren positiven Effekt eine gleichmäßigere Abscheidung des versprühten Pulverlacks oder Pulvers auf dem beschichteten Gegenstand (Werkstück) zur Folge.

Gegenstand der vorliegenden Erfindung ist daher ein Verfahren zur Erhöhung der elektrostatischen Aufladbarkeit von zur Oberflächenbeschichtung von festen Gegenstanden (Werkstücken) vorgesehenen Pulverlacken oder Pulvern, indem man in Pulverlacke oder Pulver mindestens eine salzartige, kationische Verbindung der allgemeinen Formel (1) und/oder (2) 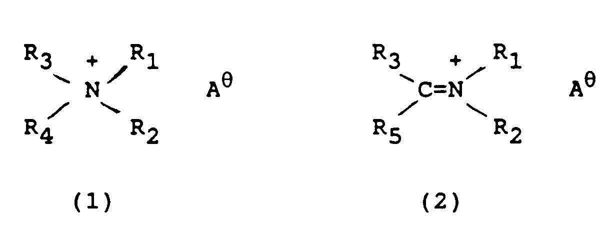
worin R₁, R₂, R₃ und R₄ unabhängig voneinander Wasserstoffatome, geradkettige oder verzweigte Alkylgruppen von 1 bis 30 Kohlenstoffatomen, vorzugsweise von 1 bis 22 Kohlenstoffatomen, Oxethylgruppen der allgemeinen Formel -(CH₂-CH₂-O)ₙ-R, worin R ein Wasserstoffatom oder eine Alkyl(C₁-C₄)-gruppe, Acylgruppe, wie beispielsweise die Acetyl-, Benzoyl- oder Naphthoylgruppe, und n eine Zahl von 1 bis 10, vorzugsweise von 1 bis 4 ist, ein- oder mehrkernige cycloaliphatische Reste von 5 bis 12 Kohlenstoffatomen, wie beispielsweise Cyclohexyl- oder Cyclopentylgruppen, ein- oder mehrkernige aromatische Reste, wie beispielsweise Phenyl-, 1-Naphthyl-, 2-Naphthyl-, Tolyl- oder Biphenylreste, oder araliphatische Reste, wie beispielsweise den Benzylrest, darstellen,wobei die aliphatischen, araliphatischen und aromatischen Reste durch Hydroxy-, Alkoxy(C₁-C₄)gruppen, primäre, sekundäre oder tertiäre Aminogruppen, wie beispielsweise N-Monoalkyl(C₁-C₄)amino- oder N-Dialkyl-(C₁-C₄)aminogruppen, ferner Säureamidgruppen, bevorzugt Phthalimid- oder Naphthalimidgruppen, sowie durch Fluor-, Chlor- oder Bromatome, die aliphatischen Reste insbesondere durch 1 bis 33 Fluoratome, substituiert sein können, R₅ ein Wasserstoff-, Fluor-, Chlor- oder Bromatom oder eine Alkyl(C₁-C₆)-, Alkoxy(C₁-C₆)- oder primäre Aminogruppe bedeutet, und A^{⊖} das Äquivalent eines Anions, vorzugsweise eines organischen Anions, und hier wiederum vorzugsweise den anionischen Rest einer aliphatischen oder aromatischen Carbon- oder Sulfonsäure, darstellt, und wobei R₁ und R₃ Teil eines Ringsystems mit 5 bis 7 Kohlenstoffatomen, die durch 1 oder 2 Heteroatome, wie ein Stickstoff-, Sauerstoff- oder Schwefelatom, unterbrochen sein können (als Verbindungen dieser Art seien beispielsweise Pyridin-, Piperidinsalze und deren Derivate genannt), und 0 bis 3 Doppelbindungen sein können, in einer Menge von etwa 0,01 bis etwa 10 Gewichtsprozent, vorzugsweise 0,1 bis etwa 5 Gewichtsprozent, homogen einarbeitet, sowie die Verwendung der so behandelten Pulverlacke oder Pulver zur Oberflächenbeschichtung von festen Gegenständen (Werkstücken) aus Metall, Holz, Kunststoff, Glas, Keramik, Beton, Textilmaterial, Papier oder Kautschuk.

Besonders geeignet sind solche salzartige, kationische Verbindungen der genannten allgemeinen Formel (1), bei welchen R₁, R₂, R₃ und R₄ unabhängig voneinander Wasserstoffatome, Alkylgruppen von 1 bis 30 Kohlenstoffatomen und Benzylgruppen bedeuten und A^{⊖} den anionischen Rest einer Phenolcarbon- oder -sulfonsäure, einer Naphtholcarbonsäure oder Naphtholsulfonsäure oder eines Derivats davon, wie beispielsweise der 1-Hydroxynaphthyl-2-sulfonsäure, Mono- und Bishydroxynaphthylsulfonsäure, 2-Hydroxynaphthyl-3-carbonsäure, 2-Hydroxynaphthyl-3-carbonsäure, 1-Aminonaphthyl-4-sulfonsäure, 4-Methylphenyl-1-sulfonsäure oder 2-Hydroxynaphthyl-6-carbonsäure darstellt.

An Einzelverbindungen der genannten allgemeinen Formel (1) und (2) mit organischen Anionen seien beispielsweise folgende aufgeführt.

Benzyl-tri-n-butylammoniumhydroxynaphthylsulfonat, Benzyl-tri-n-butylammoniumbishydroxynaphthylsulfonat, Hexadecyltrimethylammonium-2-hydroxynapthyl-3-carboxylat, Cosyltrimethylammonium-2-hydroxynaphthyl-3-carboxylat, Docosyl-trimethylammonium-2-hydroxynaphthyl-3-carboxylat, Benzyl-di-n-butyl-n-propylammonium-1-aminonaphthyl-4-sulfonat, Stearyldimethylphenethylammoniumtoluol-4-sulfonat, Cetyltrimethylammonium-salicylat, (3-Phthalimidopropyl)-cetyldimethylammonium-tosylat, (3-Succinimidopropyl)-ethyldimethylammonium-tosylat, (3-Phthalimidopropyl)-cetyldimethylammonium-tosylat, (3-Phthalimidopropyl)-trimethylammonium-methylsulfat, Distearyldimethylammoniummethylsulfat, Pyridinium-tosylat, sowie die aufgeführten quaternären Ammoniumverbindungen in ihrer Form als 2-Hydroxynaphthyl-6-carboxylat bzw. als 4-(3-Hydroxy-2-naphthoylamino)-phenylsulfonat.

Die erfindungsgemäß zur Anwendung gelangenden Verbindungen können im Pulverlack bzw. Pulver gelöst oder dispergiert vorliegen. Die Einarbeitung kann in an sich bekannter Weise, beispielsweise durch Mischen und Extrudieren oder Einkneten der salzartigen Verbindung in das zugrundeliegende Harz, z.B. Polyesterharz erfolgen. Die erfindungsgemäß eingesetzten Verbindungen können als getrocknete und gemahlene Pulver, als Dispersion oder Masterbatch oder in sonstiger geeigneter Form oder in Lösung zugegeben werden. Ebenso können die Verbindungen auch grundsätzlich schon bei der Herstellung der jeweiligen Pulver (lack)harze zugegeben werden, d.h. im Verlauf deren Polymerisation oder Polykondensation. Ein vorteil der erfindungsgemäßen Verbindungen besteht darin, daß die Einarbeitung erfolgt, ohne daß hierzu speziell entwickelte Pulverrezepturen erforderlich sind, was wiederum die allgemeine Verwendbarkeit der genannten Verbindungen einschränken würde; die Einarbeitung der Verbindungen besteht lediglich in der Zugabe während des dazu ausgewählten Arbeitsschrittes bei der Pulver(lack)herstellung; ein zusätzlicher Verfahrensschritt wird nicht benötigt.

Der Vorteil, daß die erfindungsgemäßen Verbindungen im Pulverlack bzw. Pulver gelöst oder dispergiert vorliegen, besteht darin, daß alle Pulverteilchen gleichermaßen eine erhöhte elektrostatische Aufladbarkeit aufweisen, es also nicht zu uneinheitlichen Effekten kommen kann. Ebenso wenig können Uneinheitlichkeiten auf Grund von Zudosierungsschwierigkeiten, ungenügender Vermengung oder wegen Entmischung auftreten.

Die erfindungsgemäß zur Anwendung gelangenden Verbindungen können in pigmentierten oder nicht-pigmentierten (Klarlack), bunten oder unbunten Pulverlack- bzw. Pulverlacksystemen eingesetzt werden.

Da der Zusatz der salzartigen, kationischen Verbindungen zur Erhöhung der Aufladbarkeit und zur Verbesserung von Umgriff und Abscheidequote andererseits die sonstigen mechanischen Eigenschaften und die Verarbeitbarkeit möglichst wenig beeinträchtigen darf, d.h. die Zusatzmenge möglichst gering sein sollte, ist es von großem Vorteil, daß es sich bei den erfindungsgemäß zur Anwendung gelangenden Verbindungen um hochwirksame Produkte handelt, die eine spezielle Auswahl aus den großen Verbindungsklassen der quaternären Ammonium- und Immoniumverbindungen darstellen. So sind beispielsweise quaternäre Ammoniumverbindungen, wie Hexadecyltrimethylammoniumchlorid oder Distearyldimethylammoniumchlorid, welche auch die Aufladung von Pulvern verbessern können, auf Grund ihrer physikalischen Konsistenz und ihrer Verarbeitbarkeit wenig geeignet. Um solche Verbindungen einsetzbar zu machen, müssen sie z.B. auf Kieselgur aufgezogen werden, was wiederum mit entsprechendem Aufwand verbunden ist (siehe hierzu Beispiel (10)). Ferner sind vor allem solche Ammonium- und Immoniumverbindungen geeignet, deren Wasserlöslichkeit bei 20°C unter 2 g/l ist.

Die Pulverlacke bzw. Pulver, in denen die kationischen Verbindungen der genannten Formeln (1) und/oder (2) enthalten sind, können zum Beschichten von beispielsweise Metall, Kunststoff, Holz, Keramik, Beton, Glas, Textilien oder Papier eingesetzt werden.

Von ganz besonderem Vorteil ist, daß die Verwendung der erfindungsgemäß eingesetzten Verbindungen in Pulverlacken oder Pulvern, insbesondere in triboelektrisch versprühbaren Pulverlacken, eine größere Auswahl an Harzen ermöglicht und neue Harzsysteme erschließt. Während bisher im wesentlichen nur Pulverlacke auf reiner Epoxidharzbasis zufriedenstellend triboelektrisch versprühbar waren, kann jetzt auch auf andere Harzsysteme zurückgegriffen werden. Insbesondere können nun auch Pulverlacke auf Basis von Polyesterharzen durch Verwendung der erfindungsgemäß zur Anwendung gelangenden Verbindungen triboelektrisch appliziert werden.

Ein weiterer Vorteil der Verwendung der kationischen Verbindungen der genannten Formeln (1) und/oder (2) ist die erhöhte Abscheidequote der Pulverlacke. Sie ermöglicht kürzere Aufsprühzeiten, was in vielerlei Hinsicht günstig, beispielsweise kostensenkend ist. In Kombination mit der erhöhten Aufladbarkeit und dem verbesserten Umgriff kann erreicht werden, daß nicht nur eine erhöhte Abscheidung des versprühten Pulverlackes auf den großen Flächen erfolgt, sondern auch eine gleichmäßige Beschichtung in Hohlräumen, Innenkanten und -ecken sowie auf der Rückseite der Gegenstände ermöglicht wird. Die besprühten Gegenstände (Werkstücke) lassen sich somit gleichmäßiger beschichten.

Die in den nachstehenden Beispielen aufgeführten Pulverlacke wurden durch Extrudieren hergestellt und sind hinsichtlich des Herstellungsverfahrens und der Teilchengrößenverteilung (mittlere Teilchengröße 50 µm) untereinander vergleichbar. Die Triboversprühung der Pulver(lacke) wurde mit dem Sprühgerät "Tribo Star" der Firma Intec (Dortmund) mit einem Normsprührohr und einer Sterninnenstange bei maximalem Pulverdurchsatz mit einem Sprühdruck von 3 bar durchgeführt. Der zu besprühende Gegenstand, ein vielfach gekanteter Metallwürfel (Größe ca. 5 x 5 x 5 cm) wurde in einer Spritzkabine aufgehängt und aus ca. 20 cm Abstand direkt von vorne ohne weitere Bewegung des Sprühgerätes besprüht. Die jeweilige Aufladung des versprühten Pulvers wurde mit einem "Meßgerät zur Messung von triboelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebene Stromstärke wird in µA angezeigt. Umgriff und Deckvermögen wurden visuell beurteilt. Insbesondere wurde beachtet, inwieweit Rückseiten, Hohlräume, Innenkanten und -ecken und Vertiefungen hinter Kanten gleichmäßig mit Lack belegt waren. Die visuelle Beurteilung wird gemäß Bewertungsskala 2.1 DIN 53 230 mit Kennzahlen von 0 bis 5 angegeben. Hierbei ist 0 die bestmögliche und 5 die schlechtestmögliche Bewertung.

Die nachstehenden Beispiele dienen zur Erläuterung der Erfindung, ohne sie darauf zu beschränken. Die angegebenen Teile bedeuten Gewichtsteile.

### Beispiel 1 (Vergleichsbeispiel)

Ein Pulverlack der Zusammensetzung

| | |
|---|---|
| ®Alftalat AN 721 (Carboxylgruppenhaltiger Polyester der HOECHST AG) | 259 Teile |
| ®Beckopox EP 303 (Epoxidharz Typ 3 der HOECHST AG) | 111 Teile |
| ®Alftalat 792 (Hydroxylgruppenhaltiger Polyester der HOECHST AG) | 200 Teile |
| ®Kronos 2160 (Titandioxid der Firma Kronos Titan GmbH) | 295 Teile |
| Blanc Fixe F (Bariumsulfat der Firma Sachtleben Chemie GmbH) | 100 Teile |
| ®Additol XL 496 (Verlaufsmittel der HOECHST AG) | 30 Teile |
| Benzoin | 5 Teile |
| | 1̅0̅0̅0̅ T̅e̅i̅l̅e̅ |

erfährt bei der triboelektrischen Versprühung unter Verwendung einer 38 cm langen Sterninnenstange eine elektrostatische Aufladung, die einer Stromstärke von 2,1 bis 2,4 µA entspricht.

Die visuelle Beurteilung des besprühten Werkstückes (Besprühdauer 5 Sekunden) ergab die Kennzahl 4; die abgeschiedene Pulvermenge nach 5 Sekunden betrug 1,1 g.

Bei Verwendung einer 15 cm langen Sterninnenstange erfährt der Pulverlack bei der triboeelektrischen Versprühung eine Aufladung, die einer Stromstärke von 0,6 bis 0,7 µA entspricht.

### Beispiel 2

In einen Pulverlack der in Beispiel 1 beschriebenen Zusammensetzung wird 0,5 Gewichtsprozent Benzyl-tri-n-butylammoniummonohydroxynaphthylsulfonat homogen eingearbeitet.

Bei der triboelektrischen Versprühung unter Verwendung einer 38 cm langen Sterninnenstange wird eine elektrostatische Aufladung erreicht, die einer Stromstärke von 3,1 bis 3,4 µA entspricht.

Die visuelle Beurteilung des besprühten Werkstückes (Besprühdauer 5 Sekunden) ergab die Kennzahl 3. Die nach 5 Sekunden abgeschiedene Pulvermenge betrug 1,5 g.

Bei Verwendung einer 15 cm langen Sterninnenstange erfährt der Pulverlack bei der triboelektrischen Versprühung eine Aufladung, die einer Stromstärke von 0,7 bis 0,8 µA entspricht.

### Beispiel 3

Ein Pulverlack der in Beispiel 2 beschriebenen Zusammensetzung, welcher jedoch statt 0,5 Gewichtsprozent 1 Gewichtsprozent des dort genannten Additives enthält, erfährt bei der triboelektrischen Versprühung unter Verwendung einer 38 cm langen Sterninnenstange eine elektrostatische Aufladung, die einer Stromstärke von 3,9 bis 4,0 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 1,6 g.

Bei Verwendung einer 15 cm langen Sterninnenstange erfährt der Pulverlack bei der triboelektrischen Versprühung eine Aufladung, die einer Stromstärke von 0,8 bis 0,9 µA entspricht.

### Beispiel 4

Ein Pulverlack der in Beispiel 2 beschriebenen Zusammensetzung, welcher jedoch statt 0,5 Gewichtsprozent 2 Gewichtsprozent des dort genannten Additives enthält, erfährt bei der triboelektrischen Versprühung unter Verwendung einer 38 cm langen Sterninnenstange eine elektrostatische Aufladung, die einer Stromstärke von 4,2 bis 4,4 µA entspricht.

Die visuelle Beurteilung des besprühten Werkstückes (Sprühdauer 5 Sekunden) ergab die Kennzahl 1. Die nach 5 Sekunden abgeschiedene Pulvermenge betrug 1,6 g.

Bei Verwendung einer 15 cm langen Sterninnenstange erfährt der Pulverlack bei der triboelektrischen Versprühung eine Aufladung, die einer Stromstärke von 1,0 bis 1,1 µA entspricht.

### Beispiel 5 (Vergleichsbeispiel)

Ein Pulverlack der Zusammensetzung

| | |
|---|---|
| ®Alftalat AN 721 (Carboxylgruppenhaltiger Polyester der HOECHST AG) | 399 Teile |
| ®Beckopox EP 303 (Epoxidharz Typ 3 der HOECHST AG) | 171 Teile |
| ®Kronos 2160 (Titandioxid der Firma Kronos Titan GmbH) | 295 Teile |
| Blanc Fixe F (Bariumsulfat der Firma Sachtleben Chemie GmbH) | 100 Teile |
| ®Additol XL 496 (Verlaufsmittel der HOECHST AG) | 30 Teile |
| Benzoin | 5 Teile |
| | 1̅0̅0̅0̅ T̅e̅i̅l̅e̅ |

erfährt bei der triboelektrischen Versprühung unter Verwendung einer 38 cm langen Sterninnenstange eine elektrostatische Aufladung, die einer Stromstärke von 0,9 bis 1,2 µA entspricht.

Die visuelle Beurteilung des besprühten Werkstückes (Besprühdauer 5 Sekunden) ergab die Kennzahl 4; die abgeschiedene Pulvermenge nach 5 Sekunden betrug 1,4 g.

Bei Verwendung einer 15 cm langen Sterninnenstange erfährt der Pulverlack bei der triboelektrischen Versprühung eine Aufladung, die einer Stromstärke von 0,3 bis 0,4 µA entspricht.

### Beispiel 6

In einen Pulverlack der in Beispiel 5 beschriebenen Zusammensetzung wird 0,5 Gewichtsprozent des in Beispiel 2 beschriebenen Additives homogen eingearbeitet.

Bei der triboelektrischen Versprühung unter Verwendung einer 38 cm langen Sterninnenstange wird eine elektrostatische Aufladung erreicht, die einer Stromstärke von 1,3 bis 1,4 µA entspricht.

Die visuelle Beurteilung des besprühten Werkstückes (Besprühdauer 5 Sekunden) ergab die Kennzahl 3. Die nach 5 Sekunden abgeschiedene Pulvermenge betrug 1,4 g.

Bei Verwendung einer 15 cm langen Sterninnenstange erfährt der Pulverlack bei der triboelektrischen Versprühung eine Aufladung, die einer Stromstärke von 0,9 µA entspricht.

### Beispiel 7

In einen Pulverlack der in Beispiel 5 beschriebenen Zusammensetzung wird 0,5 Gewichtsprozent Hexadecyltrimethylammonium-2-hydroxynapthyl-3-carboxylat homogen eingearbeitet. Bei der triboelektrischen Versprühung unter Verwendung einer 38 cm langen Sterninnenstange wird eine elektrostatische Aufladung erreicht, die einer Stromstärke von 2,6 bis 2,7 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 2,2 g.

Die Herstellung des Hexadecyltrimethyl-ammonium-2-hydroxynaphthyl-3-carboxylats ist in EP 0 097 926 B1 beschrieben.

### Beispiel 8

Ein Pulverlack der in Beispiel 7 beschriebenen Zusammensetzung, der jedoch statt 0,5 Gewichtsprozent 1 Gewichtsprozent des dort genannten Additives enthält, erfährt bei der triboelektrischen Versprühung unter Verwendung einer 38 cm langen Sterninnenstange eine elektrostatische Aufladung, die einer Stromstärke von 2,8 bis 2,9 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 2,5 g.

### Beispiel 9

Ein Pulverlack der in Beispiel 7 beschriebenen Zusammensetzung, welcher jedoch statt 0,5 Gewichtsprozent 2 Gewichtsprozent des dort genannten Additives enthält, erfährt bei der triboelektrischen Versprühung unter Verwendung einer 38 cm langen Sterninnenstange eine elektrostatische Aufladung, die einer Stromstärke von 2,8 bis 2,9 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 2,5 g.

### Beispiel 10

In einen Pulverlack der in Beispiel 5 beschriebenen Zusammensetzung werden 2 Gewichtsprozent einer Ammoniumverbindung homogen eingearbeitet. Bei der Ammoniumverbindung handelt es sich um Hexadecyltrimethylammoniumchlorid. Um diese Verbindung für einen Pulverlack geeignet verarbeitbar zu machen, wird sie aus einer wäßrig-isopropanolischen Lösung (Wirkstoffgehalt ca. 50 %), auf die Kieselsäure ®Sipernat 22 (Firma DEGUSSA, siehe DEGUSSA-Firmenschrift "Fällungskieselsäuren und Silikate, Herstellung, Eigenschaften und Anwendung") im Verhältnis 1 : 1 aufgezogen. Die so erzeugte Ammoniumsalz-Kieselsäure-"Einlagerungsverbindung" wird dem Pulverlack im entsprechenden Verhältnis zugesetzt.

Bei der triboelektrischen Versprühung unter Verwendung einer 38 cm langen Sterninnenstange wird eine elektrostatische Aufladung erreicht, die einer Stromstärke von 1,8 bis 2,0 µA entpsricht.

Die visuelle Beurteilung des besprühten Werkstückes (Sprühdauer 5 Sekunden) ergab die Kennzahl 3. Die nach 5 Sekunden abgeschiedene Pulvermenge betrug 1,4 g.

Bei Verwendung einer 15 cm langen Sterninnenstange erfährt der Pulverlack bei der triboelektrischen Versprühung eine Aufladung, die einer Stromstärke von 0,6 bis 0,7 µA entspricht.

### Beispiel 11 (Vergleichsbeispiel)

Ein Pulver, bestehend aus reinem Styrol-Methacryl-Copolymerisat (®Dialec S 309 der Firma Diamond Shamrock) erfährt bei der triboelektrischen Versprühung sowohl unter Verwendung einer 38 cm langen als auch bei Verwendung einer 15 cm langen Sterninnenstange eine elektrostatische Aufladung, die einer Stromstärke von ±0 µA entspricht.

### Beispiel 12

In ein Pulver der in Beispiel 11 beschriebenen Zusammensetzung wird 1 Gewichtsprozent des in Beispiel 2 genannten Additives homogen eingearbeitet. Bei der triboelektrischen Versprühung unter Verwendung einer 38 cm langen Sterninnenstange wird eine elektrostatische Aufladung erreicht, die einer Stromstärke von 5,6 bis 5,8 µA entspricht.

Bei Verwendung einer 15 cm langen Sterninnenstange erfährt das Pulver bei der triboelektrischen Versprühung eine Aufladung, die einer Stromstärke von 2,6 bis 2,8 µA entspricht.

### Beispiel 13

In ein Pulver der in Beispiel 11 beschriebenen Zusammensetzung wird 1 Gewichtsprozent des in Beispiel 7 genannten Additives homogen eingearbeitet. Bei der triboelektrischen Versprühung unter Verwendung einer 38 cm langen Sterninnenstange wird eine elektrostatische Aufladung erreicht, die einer Stromstärke von 7,9 bis 8,2 µA entspricht.

Bei Verwendung einer 15 cm langen Sterninnenstange erfährt das Pulver bei der triboelektrischen Versprühung eine Aufladung, die einer Stromstärke von 3,6 bis 3,7 µA entspricht.

### Beispiel 14

In ein Pulver der in Beispiel 11 beschriebenen Zusammensetzung wird 1 Gewichtsprozent eines Additives, das zu ca. 80 Teilen aus Docosyltrimethylammoniumsalz und zu ca. 20 Teilen aus Cosyltrimethylammoniumsalz, mit jeweils 2-Hydroxynaphthyl-3-carboxylat als Anion, besteht, homogen eingearbeitet. Bei der triboelektrischen Versprühung unter Verwendung einer 38 cm langen Sterninnenstange wird eine elektrostatische Aufladung erreicht, die einer Stromstärke von 7,9 bis 8,3 µA entspricht.

Bei Verwendung einer 15 cm langen Sterninnenstange erfährt das Pulver bei der triboelektrischen Versprühung eine Aufladung, die einer Stromstärke von 4,2 bis 4,3 µA entspricht.

Die Herstellung des eingesetzten Additives ist in EP 0 097 926 B1 beschrieben.

### Beispiel 15

In ein Pulver, wie in Beispiel 11 beschrieben, wird 1 Gewichtsprozent eines Additives, das im wesentlichen aus n-Octadecyltrimethylammonium mit einem Molybdänsäureanion als Gegenion besteht, homogen eingearbeitet.

Bei der triboelektrischen Versprühung unter Verwendung einer 38 cm langen Sterninnenstange erfährt das Pulver eine Aufladung, die einer Stromstärke von 2,5 bis 2,6 µA entspricht.

Bei Verwendung einer 15 cm langen Sterninnenstange erfährt das Pulver bei der triboelektrischen Versprühung eine Aufladung, die einer Stromstärke von 0,4 bis 0,5 µA entspricht.

### Beispiel 16

In ein Pulver, wie in Beispiel 11 beschrieben, wird 1 Gewichtsprozent Methyl-trioctyl-ammoniumchlorid homogen eingearbeitet.

Bei der triboelektrischen Versprühung unter Verwendung einer 38 cm langen Sterninnenstange erfährt das Pulver eine Aufladung, die einer Stromstärke von 4,2 bis 4,4 µA entspricht.

Bei Verwendung einer 15 cm langen Sterninnenstange erfährt das Pulver bei der triboelektrischen Versprühung eine Aufladung, die einer Stromstärke von 3,2 bis 3,4 µA entspricht.

### Beispiel 17

In ein Pulver, wie in Beispiel 11 beschrieben, wird 1 Gewichtsprozent Benzyl-trimethyl-ammoniumchlorid homogen eingearbeitet.

Bei der triboelektrischen Versprühung unter Verwendung einer 38 cm langen Sterninnenstange erfährt das Pulver eine Aufladung, die einer Stromstärke von 3,0 bis 3,1 µA entspricht.

### Beispiel 18

In ein Pulver, wie in Beispiel 11 beschrieben, wird 1 Gewichtsprozent Tetrabutylammoniumhydrogensulfat homogen eingearbeitet.

Bei der triboelektrischen Versprühung unter Verwendung einer 38 cm langen Sterninnenstange erfährt das Pulver eine Aufladung, die einer Stromstärke von 5,2 bis 5,4 µA entspricht.

Bei Verwendung einer 15 cm langen Sterninnenstange erfährt das Pulver bei der triboelektrischen Versprühung eine Aufladung, die einer Stromstärke von 3,7 bis 4,0 µA entspricht.

## Patentansprüche (Patentansprüche für folgende(n) Vertragsstaat(en): AT, CH, IT, LI, NL)

1. Verfahren zur Erhöhung der elektrostatischen Aufladbarkeit von zur Oberflächenbeschichtung von festen Gegenständen vorgesehenen Pulverlacken oder Pulvern, dadurch gekennzeichnet, daß man in Pulverlacke oder Pulver mindestens eine salzartige, kationische Verbindung der allgemeinen Formeln (1) und/oder (2) 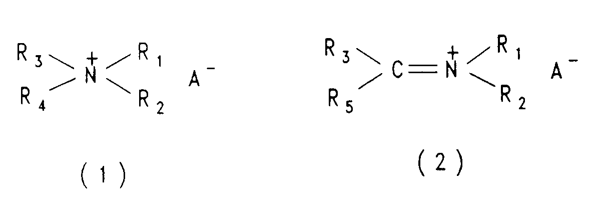 worin R₁, R₂, R₃ und R₄ unabhängig voneinander Wasserstoffatome, geradkettige oder verzweigte Alkylgruppen von 1 bis 30 Kohlenstoffatomen, Oxethylgruppen der allgemeinen Formel -(CH₂-CH₂-O)ₙ-R, worin R ein Wasserstoffatom oder eine Alkyl(C₁-C₄)- oder Acylgruppe ist und n eine Zahl von 1 bis 10 ist, ein- oder mehrkernige cycloaliphatische Reste von 5 bis 12 Kohlenstoffatomen, ein- oder mehrkernige aromatische Reste oder araliphatische Reste darstellen, R₅ ein Wasserstoff-, Fluor-, Chlor- oder Bromatom oder eine Alkyl(C₁-C₆)-, Alkoxy(C₁-C₆)- oder primäre Aminogruppe bedeutet, und wobei R₁ und R₃ Teil eines Ringsystems mit 5 bis 7 Atomen und 0 bis 3 Doppelbindungen sein können, und A^{⊖} das Äquivalent eines Anions bedeutet, in einer Menge von etwa 0,01 bis etwa 10 Gewichtsprozent homogen einarbeitet, wobei die salzartigen kationischen Verbindungen der allgemeinen Formeln (1) und (2) im Pulverlack bzw. Pulver gelöst oder dispergiert werden.

2. Verfahren nach Anspruch 1, dadurch gekennzeichnet, daß in der dort genannten allgemeinen Formel (1) R₁, R₂, R₃ und R₄ unabhängig voneinander Wasserstoffatome, Alkylgruppen von 1 bis 30 Kohlenstoffatomen und Benzylgruppen bedeuten.

3. Verfahren nach mindestens einem der Ansprüche 1 und 2, dadurch gekennzeichnet, daß in den in Anspruch 1 genannten allgemeinen Formeln (1) und (2) A^{⊖} den anionischen Rest einer organischen Verbindung bedeutet.

4. Verfahren nach mindestens einem der Ansprüche 1 und 2, dadurch gekennzeichnet, daß in den in Anspruch 1 genannten allgemeinen Formeln (1) und (2) A^{⊖} den anionischen Rest einer aliphatischen oder aromatischen Carbon- oder Sulfonsäure bedeutet.

5. Verfahren nach mindestens einem der Ansprüche 1 bis 4, dadurch gekennzeichnet, daß die kationischen Verbindungen der in Anspruch 1 genannten allgemeinen Formeln (1) und (2) eine Wasserlöslichkeit bei 20°C unter 2,0 g/l aufweisen.

6. Verfahren nach mindestens einem der Ansprüche 1 bis 5, dadurch gekennzeichnet, daß man die kationischen Verbindungen der in Anspruch 1 genannten allgemeinen Formeln (1) und/oder (2) in einer Menge von etwa 0,1 bis etwa 5 Gewichtsprozent in die Pulverlacke oder Pulver homogen einarbeitet.

7. Verfahren nach mindestens einem der Ansprüche 1 bis 6, dadurch gekennzeichnet, daß den Pulverlacken oder Pulvern, in welche die kationischen Verbindungen der in Anspruch 1 genannten allgemeinen Formeln (1) und/oder (2) homogen eingearbeitet werden, Epoxidharze, hydroxyl- und carboxylgruppenhaltige Polyesterharze oder Acrylharze oder Kombinationen daraus zugrundeliegen.

8. Verfahren nach mindestens einem der Ansprüche 1 bis 7, dadurch gekennzeichnet, daß man die kationischen Verbindungen der in Anspruch 1 genannten allgemeinen Formeln (1) und/oder (2) in Form eines getrockneten und gemahlenen Pulvers oder in Form einer Dispersion, eines Masterbatch oder einer Lösung in die Pulverlacke oder Pulver homogen einarbeitet.

9. Verwendung von Pulverlacken oder Pulvern, deren elektrostatische Aufladbarkeit gemäß einem oder mehreren der Ansprüche 1 bis 8 erhöht wurde, zur Oberflächenbeschichtung von Gegenständen aus Metall, Holz, Kunststoff, Glas, Keramik, Beton, Textilmaterial, Papier oder Kautschuk.

10. Verwendung von Pulverlacken oder Pulvern, enthaltend Epoxid-, carboxyl- und hydroxylgruppenhaltige Polyester- oder Acrylharze oder Kombinationen daraus, und homogen verteilt, gelöst und dispergiert, etwa 0,01 bis etwa 10 Gewichtsprozent mindestens einer kationischen Verbindung der in Anspruch 1 genannten allgemeinen Formeln (1) und/oder (2) zur Oberflächenbeschichtung von Gegenständen aus Metall, Holz, Kunststoff, Glas, Keramik, Beton, Textilmaterial, Papier oder Kautschuk.

11. Pulverlacke oder Pulver, enthaltend Epoxid-, carboxyl- und hydroxylgruppenhaltige Polyester- oder Acrylharze oder Kombinationen daraus, und, homogen verteilt, gelöst und dispergiert, etwa 0,01 bis etwa 10 Gewichtsprozent mindestens einer salzartigen, kationischen Verbindung der allgemeinen Formeln (1) und/oder (2) 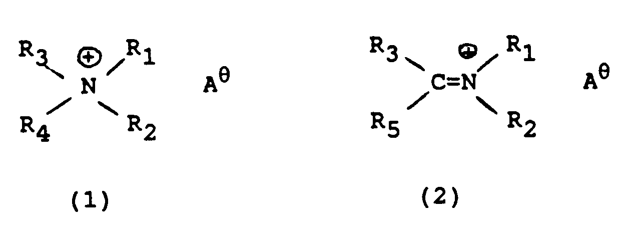 worin R₁, R₂, R₃ und R₄ unabhängig voneinander Wasserstoffatome, geradkettige oder verzweigte Alkylgruppen von 1 bis 30 Kohlenstoffatomen, Oxethylgruppen der allgemeinen Formel -(CH₂-CH₂-O)ₙ-R, worin R ein Wasserstoffatom oder eine Alkyl(C₁-C₄)- oder Acylgruppe ist und n eine Zahl von 1 bis 10 ist, ein- oder mehrkernige cycloaliphatische Reste von 5 bis 12 Kohlenstoffatomen, ein- oder mehrkernige aromatische Reste oder araliphatische Reste darstellen, R₅ ein Wasserstoff-, Fluor-, Chlor- oder Bromatom oder eine Alkyl(C₁-C₆)-, Alkoxy(C₁-C₆)- oder primäre Aminogruppe, und A^{⊖} das Äquivalent des Anions einer organischen Verbindung bedeutet.

## Patentansprüche (Patentansprüche für folgende(n) Vertragsstaat(en): DE, FR, GB)

1. Verfahren zur Erhöhung der elektrostatischen Aufladbarkeit von zur Qberflächenbeschichtung von festen Gegenständen vorgesehenen Pulverlacken oder Pulvern, dadurch gekennzeichnet daß man in Pulverlacke oder Pulver mindestens eine salzartige, kationische Verbindung der allgemeinen Formeln (1) und/oder (2) - ausgenommen Cetylpyridiniumchlorid, Stearyldimethylbenzylammonium-p-toluolsulfonat und [C₁₆H₃₃N(CH₃)₃]⁺ 1/6[Mo₇O₃₆]⁶⁻ - 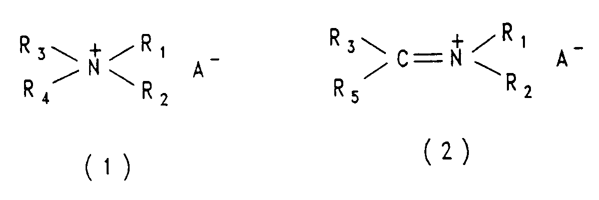 worin R₁, R₂, R₃ und R₄ unabhängig voneinander Wasserstoffatome, geradkettige oder verzweigte Alkylgruppen von 1 bis 30 Kohlenstoffatomen, Oxethylgruppen der allgemeinen Formel -(CH₂-CH₂-O)ₙ-R, worin R ein Wasserstoffatom oder eine Alkyl(C₁-C₄)- oder Acylgruppe ist und n eine Zahl von 1 bis 10 ist, ein- oder mehrkernige cycloaliphatische Reste von 5 bis 12 Kohlenstoffatomen, ein- oder mehrkernige aromatische Reste oder araliphatische Reste darstellen, R₅ ein Wasserstoff-, Fluor-, Chlor- oder Bromatom oder eine Alkyl(C₁-C₆)-, Alkoxy(C₁-C₆)- oder primäre Aminogruppe bedeutet, und wobei R₁ und R₃ Teil eines Ringsystems mit 5 bis 7 Atomen und 0 bis 3 Doppelbindungen sein können, und A^{⊖} das Äquivalent eines Anions bedeutet, in einer Menge von etwa 0,01 bis etwa 10 Gewichtsprozent homogen einarbeitet, wobei die salzartigen kationischen Verbindungen der allgemeinen Formeln (1) und (2) im Pulverlack bzw. Pulver gelöst oder dispergiert werden.

2. Verfahren nach Anspruch 1, dadurch gekennzeichnet, daß in der dort genannten allgemeinen Formel (1) R₁, R₂, R₃ und R₄ unabhängig voneinander Wasserstoffatome, Alkylgruppen von 1 bis 30 Kohlenstoffatomen und Benzylgruppen bedeuten.

3. Verfahren nach mindestens einem der Ansprüche 1 und 2, dadurch gekennzeichnet, daß in den in Anspruch 1 genannten allgemeinen Formeln (1) und (2) A^{⊖} den anionischen Rest einer organischen Verbindung bedeutet.

4. Verfahren nach mindestens einem der Ansprüche 1 und 2, dadurch gekennzeichnet, daß in den in Anspruch 1 genannten allgemeinen Formeln (1) und (2) A^{⊖} den anionischen Rest einer aliphatischen oder aromatischen Carbon- oder Sulfonsäure bedeutet.

5. Verfahren nach mindestens einem der Ansprüche 1 bis 4, dadurch gekennzeichnet, daß die kationischen Verbindungen der in Anspruch 1 genannten allgemeinen Formeln (1) und (2) eine Wasserlöslichkeit bei 20°C unter 2,0 g/l aufweisen.

6. Verfahren nach mindestens einem der Ansprüche 1 bis 5, dadurch gekennzeichnet, daß man die kationischen Verbindungen der in Anspruch 1 genannten allgemeinen Formeln (1) und/oder (2) in einer Menge von etwa 0,1 bis etwa 5 Gewichtsprozent in die Pulverlacke oder Pulver homogen einarbeitet.

7. Verfahren nach mindestens einem der Ansprüche 1 bis 6, dadurch gekennzeichnet, daß den Pulverlacken oder Pulvern, in welche die kationischen Verbindungen der in Anspruch 1 genannten allgemeinen Formeln (1) und/oder (2) homogen eingearbeitet werden, Epoxidharze, hydroxyl- und carboxylgruppenhaltige Polyesterharze oder Acrylharze oder Kombinationen daraus zugrundeliegen.

8. Verfahren nach mindestens einem der Ansprüche 1 bis 7, dadurch gekennzeichnet, daß man die kationischen Verbindungen der in Anspruch 1 genannten allgemeinen Formeln (1) und/oder (2) in Form eines getrockneten und gemahlenen Pulvers oder in Form einer Dispersion, eines Masterbatch oder einer Lösung in die Pulverlacke oder Pulver homogen einarbeitet.

9. Verwendung von Pulverlacken oder Pulvern, deren elektrostatische Aufladbarkeit gemäß einem oder mehreren der Ansprüche 1 bis 8 erhöht wurde, zur Oberflächenbeschichtung von Gegenständen aus Metall, Holz, Kunststoff, Glas, Keramik, Beton, Textilmaterial, Papier oder Kautschuk.

10. Verwendung von Pulverlacken oder Pulvern, enthaltend Epoxid-, carboxyl- und hydroxylgruppenhaltige Polyester- oder Acrylharze oder Kombinationen daraus, und homogen verteilt, gelöst und dispergiert, etwa-0,01 bis etwa 10 Gewichtsprozent mindestens einer kationischen Verbindung der in Anspruch 1 genannten allgemeinen Formeln (1) und/oder (2) ausgenommen Cetylpyridiniumchlorid, Stearyldimethylbenzylammonium-p-toluolsulfonat und [C₁₆H₃₃N(CH₃)₃]⁺ 1/6[Mo₇O₃₆]⁶⁻ zur Oberflächenbeschichtung von Gegenständen aus Metall, Holz, Kunststoff, Glas, Keramik, Beton, Textilmaterial, Papier oder Kautschuk.

11. Pulverlacke oder Pulver, enthaltend Epoxid-, carboxyl- und hydroxylgruppenhaltige Polyester- oder Acrylharze oder Kombinationen daraus, und, homogen verteilt, gelöst und dispergiert, etwa 0,01 bis etwa 10 Gewichtsprozent mindestens einer salzartigen, kationischen Verbindung der allgemeinen Formeln (1) und/oder (2) ausgenommen Cetylpyridiniumchlorid, Stearyldimethylbenzylammonium-p-toluolsulfonat und [C₁₆H₃₃N(CH₃)₃]⁺ 1/6[Mo₇O₃₆]⁶⁻ 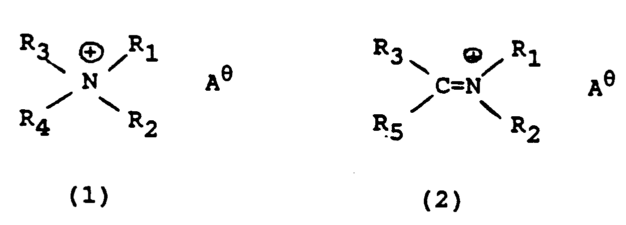 worin R₁, R₂, R₃ und R₄ unabhängig voneinander Wasserstoffatome, geradkettige oder verzweigte Alkylgruppen von 1 bis 30 Kohlenstoffatomen, Oxethylgruppen der allgemeinen Formel -(CH₂-CH₂-O)ₙ-R, worin R ein Wasserstoffatom oder eine Alkyl(C₁-C₄)- oder Acylgruppe ist und n eine Zahl von 1 bis 10 ist, ein- oder mehrkernige cycloaliphatische Reste von 5 bis 12 Kohlenstoffatomen, ein- oder mehrkernige aromatische Reste oder araliphatische Reste darstellen, R₅ ein Wasserstoff-, Fluor-, Chlor- oder Bromatom oder eine Alkyl(C₁-C₆)-, Alkoxy(C₁-C₆)- oder primäre Aminogruppe, und A^{⊖} das Äquivalent des Anions einer organischen Verbindung bedeutet.

## Claims (Claims for the following Contracting State(s): AT, CH, IT, LI, NL)

1. A process for enhancing the electrostatic chargeability of powder coatings or powders intended for surface-coating of solid objects, which comprises homogeneously incorporating at least one salt-like, cationic compound of the formulae (1) and/or (2) 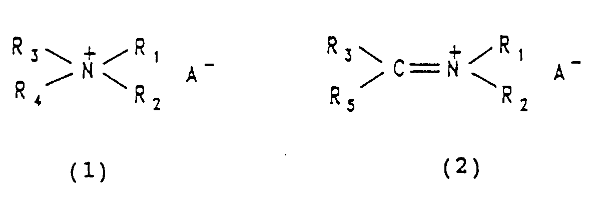 in which R₁, R₂, R₃ and R₄, independently of one another, denote hydrogen atoms, straight-chain or branched alkyl groups having 1 to 30 carbon atoms, oxethyl groups of the formula -(CH₂-CH₂-O)ₙ-R in which R is a hydrogen atom or a (C₁-C₄)alkyl or acyl group and n is a number from 1 to 10, mononuclear or polynuclear cycloaliphatic radicals having 5 to 12 carbon atoms, mononuclear or polynuclear aromatic radicals or araliphatic radicals, R₅ denotes a hydrogen, fluorine, chlorine or bromine atom or a (C₁-C₆)alkyl, (C₁-C₆)alkoxy or primary amino group, and where R₁ and R₃ may be part of a ring system having 5 to 7 atoms and 0 to 3 double bonds, and A^{⊖} denotes the equivalent of an anion, in an amount from about 0.01 to about 10 percent by weight into powder coatings or powders, where the salt-like cationic compounds of the formulae (1) or (2) are dissolved or dispersed in the powder coating or powder.

2. The process as claimed in claim 1, wherein, in the formula (1) mentioned therein, R₁, R₂, R₃ and R₄, independently of one another, denote hydrogen atoms, alkyl groups having 1 to 30 carbon atoms and benzyl groups.

3. The process as claimed in at least one of claims 1 and 2, wherein, in the formulae (1) and (2) mentioned in claim 1, A^{⊖} denotes the anionic radical of an organic compound.

4. The process as claimed in at least one of claims 1 and 2, wherein, in the formulae (1) and (2) mentioned in claim 1, A^{⊖} denotes the anionic radical of an aliphatic or aromatic carboxylic acid or sulfonic acid.

5. The process as claimed in at least one of claims 1 to 4, wherein the cationic compounds of the formulae (1) and (2) mentioned in claim 1 have a water solubility at 20°C of less than 2.0 g/l.

6. The process as claimed in at least one of claims 1 to 5, wherein the cationic compounds of the formulae (1) and/or (2) mentioned in claim 1 are homogeneously incorporated into the powder coatings or powders in an amount from about 0.1 to about 5 percent by weight.

7. The process as claimed in at least one of claims 1 to 6, wherein the powder coatings or powders into which the cationic compounds of the formulae (1) and/or (2) mentioned in claim 1 are homogeneously incorporated are based on epoxy resins, hydroxyl- and carboxyl-containing polyester resins or acrylic resins, or combinations thereof.

8. The process as claimed in at least one of claims 1 to 7, wherein the cationic compounds of the formulae (1) and/or (2) mentioned in claim 1 are homogeneously incorporated in the form of a dried and ground powder or in the form of a dispersion, a masterbatch or a solution into the powder coatings or powders.

9. The use of powder coatings or powders whose electrostatic chargeability has been enhanced as claimed in one or more of claims 1 to 8, for surface-coating objects made of metal, wood, plastic, glass, ceramic, concrete, textile material, paper or rubber.

10. The use of powder coatings or powders containing epoxy resins, carboxyl- and hydroxyl-containing polyester resins or acrylic resins, or combinations thereof, and, homogeneously distributed, dissolved and dispersed, about 0.01 to about 10% by weight of at least one cationic compound of the formulae (1) and/or (2) mentioned in claim 1, for surface-coating objects made of metal, wood, plastic, glass, ceramic, concrete, textile material, paper or rubber.

11. A powder coating or powder containing epoxy resins, carboxyl- and hydroxyl-containing polyester resins or acrylic resins, or combinations thereof, and, homogeneously distributed, dissolved and dispersed, about 0.01 to about 10% by weight of at least one salt-like, cationic compound of the formulae (1) and/or (2) 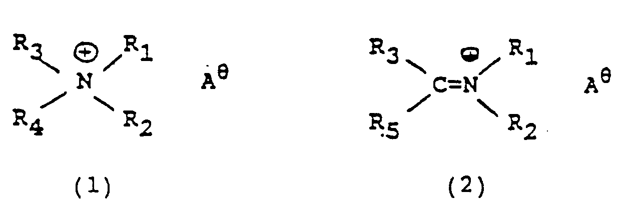 in which R₁, R₂, R₃ and R₄, independently of one another, denote hydrogen atoms, straight-chain or branched alkyl groups having 1 to 30 carbon atoms, oxethyl groups of the formula -(CH₂-CH₂-O)ₙ-R in which R is a hydrogen atom or a (C₁-C₄)alkyl or acyl group and n is a number from 1 to 10, mononuclear or polynuclear cycloaliphatic radicals having 5 to 12 carbon atoms, mononuclear or polynuclear aromatic radicals or araliphatic radicals, R₅ denotes a hydrogen, fluorine, chlorine or bromine atom or a (C₁-C₆)alkyl, (C₁-C₆)alkoxy or primary amino group, and A^{⊖} denotes the equivalent of an anion of an organic compound.

## Claims (Claims for the following Contracting State(s): DE, FR, GB)

1. A process for enhancing the electrostatic chargeability of powder coatings or powders intended for surface-coating of solid objects, which comprises homogeneously incorporating at least one salt-like, cationic compound of the formulae (1) and/or (2) - with the exception of cetylpyridinium chloride, stearyldimethylbenzylammonium-p-toluenesulfonate and [C₁₆H₃₃N(CH₃)₃]⁺ 1/6[Mo₇O₃₆]⁶⁻ - 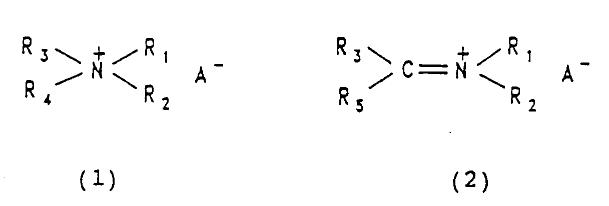 in which R₁, R₂, R₃ and R₄, independently of one another, denote hydrogen atoms, straight-chain or branched alkyl groups having 1 to 30 carbon atoms, oxethyl groups of the formula -(CH₂-CH₂-O)ₙ-R in which R is a hydrogen atom or a (C₁-C₄)alkyl or acyl group and n is a number from 1 to 10, mononuclear or polynuclear cycloaliphatic radicals having 5 to 12 carbon atoms, mononuclear or polynuclear aromatic radicals or araliphatic radicals, R₅ denotes a hydrogen, fluorine, chlorine or bromine atom or a (C₁-C₆)alkyl, (C₁-C₆)alkoxy or primary amino group, and where R₁ and R₃ may be part of a ring system having 5 to 7 atoms and 0 to 3 double bonds, and A^{⊖} denotes the equivalent of an anion, in an amount from about 0.01 to about 10 percent by weight into powder coatings or powders, where the salt-like cationic compounds of the formulae (1) or (2) are dissolved or dispersed in the powder coating or powder.

2. The process as claimed in claim 1, wherein, in the formula (1) mentioned therein, R₁, R₂, R₃ and R₄, independently of one another, denote hydrogen atoms, alkyl groups having 1 to 30 carbon atoms and benzyl groups.

3. The process as claimed in at least one of claims 1 and 2, wherein, in the formulae (1) and (2) mentioned in claim 1, A^{⊖} denotes the anionic radical of an organic compound.

4. The process as claimed in at least one of claims 1 and 2, wherein, in the formulae (1) and (2) mentioned in claim 1, A^{⊖} denotes the anionic radical of an aliphatic or aromatic carboxylic acid or sulfonic acid.

5. The process as claimed in at least one of claims 1 to 4, wherein the cationic compounds of the formulae (1) and (2) mentioned in claim 1 have a water solubility at 20°C of less than 2.0 g/l.

6. The process as claimed in at least one of claims 1 to 5, wherein the cationic compounds of the formulae (1) and/or (2) mentioned in claim 1 are homogeneously incorporated into the powder coatings or powders in an amount from about 0.1 to about 5 percent by weight.

7. The process as claimed in at least one of claims 1 to 6, wherein the powder coatings or powders into which the cationic compounds of the formulae (1) and/or (2) mentioned in claim 1 are homogeneously incorporated are based on epoxy resins, hydroxyl- and carboxyl-containing polyester resins or acrylic resins, or combinations thereof.

8. The process as claimed in at least one of claims 1 to 7, wherein the cationic compounds of the formulae (1) and/or (2) mentioned in claim 1 are homogeneously incorporated in the form of a dried and ground powder or in the form of a dispersion, a masterbatch or a solution into the powder coatings or powders.

9. The use of powder coatings or powders whose electrostatic chargeability has been enhanced as claimed in one or more of claims 1 to 8, for surface-coating objects made of metal, wood, plastic, glass, ceramic, concrete, textile material, paper or rubber.

10. The use of powder coatings or powders containing epoxy resins, carboxyl- and hydroxyl-containing polyester resins or acrylic resins, or combinations thereof, and, homogeneously distributed, dissolved and dispersed, about 0.01 to about 10% by weight of at least one cationic compound of the formulae (1) and/or (2) mentioned in claim 1 - with the exception of cetylpyridinium chloride, stearyldimethylbenzylammonium p-toluenesulfonate and [C₁₆H₃₃N(CH₃)₃]⁺ 1/6[Mo₇O₃₆]⁶⁻ -, for surface-coating objects made of metal, wood, plastic, glass, ceramic, concrete, textile material, paper or rubber.

11. A powder coating or powder containing epoxy resins, carboxyl- and hydroxyl-containing polyester resins or acrylic resins, or combinations thereof, and, homogeneously distributed, dissolved and dispersed, about 0.01 to about 10% by weight of at least one salt-like, cationic compound of the formulae (1) and/or (2) - with the exception of cetylpyridinium chloride, stearyldimethylbenzylammonium p-toluenesulfonate and [C₁₆H₃₃N(CH₃)₃]⁺ 1/6[Mo₇O₃₆]⁶⁻ - 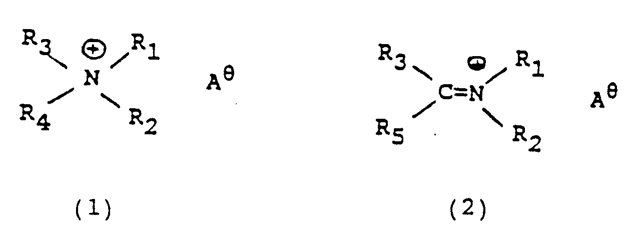 in which R₁, R₂, R₃ and R₄, independently of one another, denote hydrogen atoms, straight-chain or branched alkyl groups having 1 to 30 carbon atoms, oxethyl groups of the formula -(CH₂-CH₂-O)ₙ-R in which R is a hydrogen atom or a (C₁-C₄)alkyl or acyl group and n is a number from 1 to 10, mononuclear or polynuclear cycloaliphatic radicals having 5 to 12 carbon atoms, mononuclear or polynuclear aromatic radicals or araliphatic radicals, R₅ denotes a hydrogen, fluorine, chlorine or bromine atom or a (C₁-C₆)alkyl, (C₁-C₆)alkoxy or primary amino group, and A^{⊖} denotes the equivalent of an anion of an organic compound.

## Revendications (Revendications pour l'(les) Etat(s) contractant(s) suivant(s): AT, CH, IT, LI, NL)

1. Procédé pour augmenter l'aptitude à la charge électrostatique de peintures-poudres destinées à revêtir en surface des objets solides, caractérisé en ce qu'on incorpore jusqu'à homogénéité dans les peintures-poudres ou poudres au moins un composé cationique de type sel de formule générale (1) et/ou (2) : 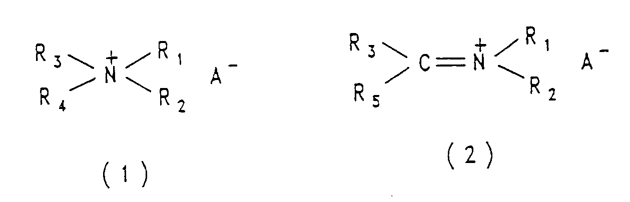 où R₁, R₂, R₃ et R₄, indépendamment les uns des autres, représentent chacun un atome d'hydrogène, un groupe alkyle à chaîne droite ou ramifiée ayant de 1 à 30 atomes de carbone, un groupe oxéthyle de formule générale -(CH₂CH₂-O)ₙ-R où R est un atome d'hydrogène ou un groupe alkyle en C₁-C₄ ou acyle, et n est un nombre de 1 à 10, un radical cycloaliphatique mono- ou polycyclique ayant de 5 à 12 atomes de carbone, un radical aromatique mono- ou polycyclique ou un radical araliphatique, R₅ est un hydrogène ou un atome de fluor, de chlore ou de brome, ou un groupe alkyle en C₁-C₆, alcoxy en C₁-C₆ ou amino primaire, R₁ et R₃ pouvant représenter une partie d'un système cyclique ayant de 5 à 7 atomes et 0 à 3 doubles liaisons, et A^{⊖} est l'équivalent d'un anion, en une quantité d'environ 0,01 à environ 10 % en poids, les composés cationiques de type sel de formules générales (1) ou (2) étant dissous ou dispersés dans la peinture-poudre ou dans la poudre.

2. Procédé selon la revendication 1, caractérisé en ce que, dans la formule (1) qui y est mentionnée, R₁, R₂, R₃ et R₄, indépendamment les uns des autres, sont chacun un atome d'hydrogène, un groupe alkyle ayant de 1 à 30 atomes de carbone ou un groupe benzyle.

3. Procédé selon au moins l'une des revendications 1 et 2, caractérisé en ce que, dans les formules générales (1) et (2) données dans la revendication 1, A^{⊖} est le résidu anionique d'un composé organique.

4. Procédé selon au moins l'une des revendications 1 et 2, caractérisé en ce que, dans les formules générales (1) et (2) données dans la revendication 1, A^{⊖} est le résidu anionique d'un acide carboxylique ou sulfonique aliphatique ou aromatique.

5. Procédé selon au moins l'une des revendications 1 à 4, caractérisé en ce que les composés cationiques ayant les formules générales (1) et (2) données dans la revendication 1 ont une solubilité dans l'eau à 20°C inférieure à 2,0 g/l.

6. Procédé selon au moins l'une des revendications 1 à 5, caractérisé en ce qu'on incorpore jusqu'à homogénéité dans les peintures-poudres ou dans les poudres les composés cationiques ayant les formules générales (1) et/ou (2) données dans la revendication 1, en une quantité d'environ 0,1 à environ 5 % en poids.

7. Procédé selon au moins l'une des revendications 1 à 6, caractérisé en ce que les peintures-poudres ou poudres dans lesquelles on incorpore jusqu'à homogénéité les composés cationiques ayant les formules générales (1) et/ou (2) données dans la revendication 1, sont à base de résines époxydes, de résines de polyester hydroxylées et carboxylées ou de résines acryliques, ou de leurs combinaisons.

8. Procédé selon au moins l'une des revendications 1 à 7, caractérisé en ce qu'on incorpore jusqu'à homogénéité dans les peintures-poudres ou dans les poudres les composés cationiques ayant les formules générales (1) et/ou (2) données dans la revendication 1, sous forme d'une poudre séchée et broyée ou sous forme d'une dispersion, d'un mélange, maître ou d'une solution.

9. Utilisation de peintures-poudres ou de poudres dont l'aptitude à la charge électrostatique a été augmentée selon l'une ou plusieurs des revendications 1 à 8, pour le revêtement superficiel d'objets en métal, en bois, en plastique, en verre, en céramique, en béton, en un matériau textile, en papier ou en caoutchouc.

10. Utilisation de peintures-poudres ou de poudres contenant des résines époxydes, des résines de polyester carboxylées et hydroxylées ou des résines acryliques ou leurs combinaisons et, répartis, dissous ou dispersés d'une manière homogène, environ 0,01 à environ 10 % en poids d'au moins un composé cationique ayant les formules générales (1) et/ou (2) données dans la revendication 1, pour le revêtement superficiel d'objets en métal, en bois, en plastique, en verre, en céramique, en béton, en un matériau textile, en papier ou en caoutchouc.

11. Peintures-poudres ou poudres contenant des résines époxydes, des résines de polyester ou acryliques carboxylées ou hydroxylées ou leurs combinaisons, et, répartis, dissous ou dispersés d'une manière homogène, environ 0,01 à environ 10 % en poids d'au moins un composé cationique de type sel de formule générale (1) et/ou (2) 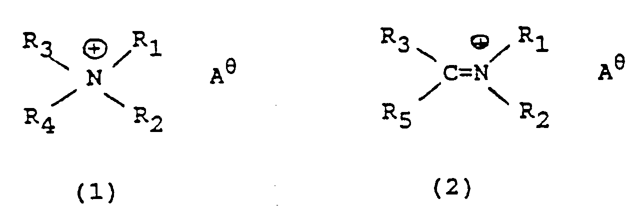 où R₁, R₂, R₃ et R₄, indépendamment les uns des autres, représentent chacun un atome d'hydrogène, un groupe alkyle à chaîne droite ou ramifiée ayant de 1 à 30 atomes de carbone, un groupe oxéthyle de formule générale -(CH₂-CH₂-O)ₙ-R où R est un atome d'hydrogène ou un groupe alkyle en C₁-C₄ ou acyle et n est un nombre de 1 à 10, un radical cycloaliphatique mono- ou polycyclique ayant de 5 à 12 atomes de carbone, un radical aromatique mono- ou polycyclique ou un radical araliphatique, R₅ est un hydrogène ou un atome de fluor, de chlore ou de brome ou un groupe alkyle en C₁-C₆, alcoxy en C₁-C₆ ou amino primaire, et A^{⊖} est l'équivalent d'un anion d'un composé organique.

## Revendications (Revendications pour l'(les) Etat(s) contractant(s) suivant(s): DE, FR, GB)

1. Procédé pour augmenter l'aptitude à la charge électrostatique de peintures-poudres destinées à revêtir en surface des objets solides, caractérisé en ce qu'on incorpore jusqu'à homogénéité dans les peintures-poudres ou poudres au moins un composé cationique de type sel de formule générale (1) et/ou (2), à l'exception du chlorure de cétylpyridinium, du paratoluènesulfonate de stéaryldiméthylbenzylammonium et du [C₁₆H₃₃N(CH₃)₃]⁺ 1/6[Mo₇O₃₆]⁶⁻ 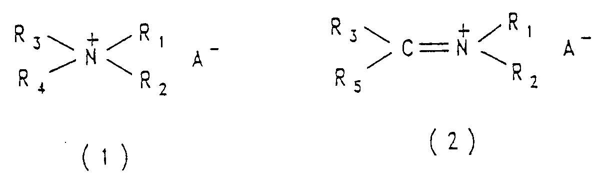 où R₁, R₂, R₃ et R₄, indépendamment les uns des autres, représentent chacun un atome d'hydrogène, un groupe alkyle à chaîne droite ou ramifiée ayant de 1 à 30 atomes de carbone, un groupe oxéthyle de formule générale -(CH₂CH₂-O)ₙ-R où R est un atome d'hydrogène ou un groupe alkyle en C₁-C₄ ou acyle, et n est un nombre de 1 à 10, un radical cycloaliphatique mono- ou polycyclique ayant de 5 à 12 atomes de carbone, un radical aromatique mono- ou polycyclique ou un radical araliphatique, R₅ est un hydrogène ou un atome de fluor, de chlore ou de brome, ou un groupe alkyle en C₁-C₆, alcoxy en C₁-C₆ ou amino primaire, R₁ et R₃ pouvant représenter une partie d'un système cyclique ayant de 5 à 7 atomes et 0 à 3 doubles liaisons, et A^{⊖} est l'équivalent d'un anion, en une quantité d'environ 0,01 à environ 10 % en poids, les composés cationiques de type sel de formules générales (1) ou (2) étant dissous ou dispersés dans la peinture-poudre ou dans la poudre.

2. Procédé selon la revendication 1, caractérisé en ce que, dans la formule (1) qui y est mentionnée, R₁, R₂, R₃ et R₄, indépendamment les uns des autres, sont chacun un atome d'hydrogène, un groupe alkyle ayant de 1 à 30 atomes de carbone ou un groupe benzyle.

3. Procédé selon au moins l'une des revendications 1 et 2, caractérisé en ce que, dans les formules générales (1) et (2) données dans la revendication 1, A^{⊖} est le résidu anionique d'un composé organique.

4. Procédé selon au moins l'une des revendications 1 et 2, caractérisé en ce que, dans les formules générales (1) et (2) données dans la revendication 1, A^{⊖} est le résidu anionique d'un acide carboxylique ou sulfonique aliphatique ou aromatique.

5. Procédé selon au moins l'une des revendications 1 à 4, caractérisé en ce que les composés cationiques ayant les formules générales (1) et (2) données dans la revendication 1 ont une solubilité dans l'eau à 20°C inférieure à 2,0 g/l.

6. Procédé selon au moins l'une des revendications 1 à 5, caractérisé en ce qu'on incorpore jusqu'à homogénéité dans les peintures-poudres ou dans les poudres les composés cationiques ayant les formules générales (1) et/ou (2) données dans la revendication 1, en une quantité d'environ 0,1 à environ 5 % en poids.

7. Procédé selon au moins l'une des revendications 1 à 6, caractérisé en ce que les peintures-poudres ou poudres dans lesquelles on incorpore jusqu'à homogénéité les composés cationiques ayant les formules générales (1) et/ou (2) données dans la revendication 1, sont à base de résines époxydes, de résines de polyester hydroxylées et carboxylées ou de résines acryliques, ou de leurs combinaisons.

8. Procédé selon au moins l'une des revendications 1 à 7, caractérisé en ce qu'on incorpore jusqu'à homogénéité dans les peintures-poudres ou dans les poudres les composés cationiques ayant les formules générales (1) et/ou (2) données dans la revendication 1, sous forme d'une poudre séchee et broyée ou sous forme d'une dispersion, d'un mélange maître ou d'une solution.

9. Utilisation de peintures-poudres ou de poudres dont l'aptitude à la charge électrostatique a été augmentée selon l'une ou plusieurs des revendications 1 à 8, pour le revêtement superficiel d'objets en métal, en bois, en plastique, en verre, en céramique, en béton, en un matériau textile, en papier ou en caoutchouc.

10. Utilisation de peintures-poudres ou de poudres contenant des résines époxydes, des résines de polyester carboxylées et hydroxylées ou des résines acryliques ou leurs combinaisons et, répartis, dissous ou dispersés d'une manière homogène, environ 0,01 à environ 10 % en poids d'au moins un composé cationique ayant les formules générales (1) et/ou (2) données dans la revendication 1, à l'exception du chlorure de cétylpyridinium, du p-toluènesulfonate de stéaryldiméthylbenzylammonium et du [C₁₆H₃₃N(CH₃)₃]⁺ 1/6[Mo₇O₃₆]⁶⁻, pour le revêtement superficiel d'objets en métal, en bois, en plastique, en verre, en céramique, en béton, en un matériau textile, en papier ou en caoutchouc.

11. Peintures-poudres ou poudres contenant des résines époxydes, des résines de polyester ou acryliques carboxylées ou hydroxylées ou leurs combinaisons, et, répartis, dissous ou dispersés d'une manière homogène, environ 0,01 à environ 10 % en poids d'au moins un composé cationique de type sel de formule générale (1) et/ou (2) à l'exception du chlorure de cétylpyridinium, du paratoluènesulfonate de stéaryldiméthylbenzylammonium et du [C₁₆H₃₃N(CH₃)₃]⁺ 1/6[Mo₇O₃₆]⁶⁻ 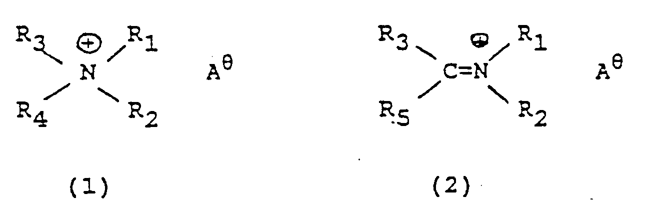 où R₁, R₂, R₃ et R₄, indépendamment les uns des autres, représentent chacun un atome d'hydrogène, un groupe alkyle à chaîne droite ou ramifiée ayant de 1 à 30 atomes de carbone, un groupe oxéthyle de formule générale -(CH₂-CH₂-O)ₙ-R où R est un atome d'hydrogène ou un groupe alkyle en C₁-C₄ ou acyle et n est un nombre de 1 à 10, un radical cycloaliphatique mono- ou polycyclique ayant de 5 à 12 atomes de carbone, un radical aromatique mono- ou polycyclique ou un radical araliphatique, R₅ est un hydrogène ou un atome de fluor, de chlore ou de brome ou un groupe alkyle en C₁-C₆, alcoxy en C₁-C₆ ou amino primaire, et A^{⊖} est l'équivalent d'un anion d'un composé organique.
